# EUROPÄISCHE PATENTANMELDUNG

(11) **EP 2 719 956 A1**
(43) Veröffentlichungstag der Anmeldung: **16.04.2014**
(21) Anmeldenummer: 12187790.6
(22) Anmeldetag: 09.10.2012
(51) Int. Cl.: F24D 11/02, F24H 4/00, F25B 13/00

(54) **Verfahren zur Temperierung eines Gebäudes und zur Bereitstellung von erwärmtem Wasser**

(71) Anmelder: Roth Werke GmbH, 35232 Dautphetal (DE)
(72) Erfinder:
(74) Vertreter: Rohmann, Michael

(57) **Zusammenfassung**

Verfahren zur Temperierung eines Gebäudes und zur Bereitstellung von erwärmtem Trinkwasser und/oder Heizungswasser, wobei eine Wärmepumpe mit einem Lüftungsmodul und einem Warmwasserspeicher eingesetzt wird. Mit dem Lüftungsmodul wird eine Sekundärluft aus einem Raum des Gebäudes abgesaugt und in einem Heizbetrieb von der Wärmepumpe erwärmt oder die Sekundärluft wird mit dem Lüftungsmodul aus dem Raum abgesaugt und in einem Kühlbetrieb von der Wärmepumpe gekühlt. Die erwärmte Sekundärluft oder die gekühlte Sekundärluft wird in den Raum zurückgefördert, wobei von dem Heizbetrieb in den Kühlbetrieb reversibel umschaltbar ist und wobei in dem Heizbetrieb und in dem Kühlbetrieb jeweils ein Wärmeträgermedium mit der Wärmepumpe erwärmt wird, mit welchem Wärmeträgermedium das Trinkwasser erwärmt wird und/oder welches Wärmeträgermedium als erwärmtes Heizungswasser vorzugsweise zur Temperierung des Raums eingesetzt wird.

## Beschreibung

Die Erfindung betrifft ein Verfahren zur Temperierung eines Gebäudes und zur Bereitstellung von erwärmtem Wasser, wobei eine Wärmepumpe mit einem Lüftungsmodul und einem Warmwasserspeicher eingesetzt wird. Weiterhin betrifft die Erfindung ein Energiesystem für Gebäude mit einer Wärmepumpe, einem Warmwasserspeicher und einem Lüftungsmodul.

Verfahren und Vorrichtung der vorstehend genannten Art sind aus der Praxis grundsätzlich bekannt. Um ein energieeffizientes System anzugeben, mit dem Abluft und Brauchwasser erwärmbar sind, hat sich bei den aus der Praxis bekannten Verfahren und Vorrichtungen der Einsatz von Wärmepumpen bewährt. Darüber hinaus ist es bekannt, Wärmepumpen auch zum Kühlen von Gebäuden einzusetzen. Im Zuge steigender Energiekosten ist der Wirkungsgrad der aus der Praxis bekannten Verfahren und Vorrichtungen verbesserungsbedürftig.

Der Erfindung liegt daher das technische Problem zugrunde, ein Verfahren der eingangs genannten Art anzugeben, das sich durch einen hohen Wirkungsgrad, eine flexible Einsetzbarkeit und leichte Steuerbarkeit auszeichnet. Ebenso liegt der Erfindung das technische Problem zugrunde, eine Vorrichtung zur Ausführung des Verfahrens anzugeben.

Zur Lösung des technischen Problems lehrt die Erfindung ein Verfahren zur Temperierung eines Gebäudes und zur Bereitstellung von erwärmtem Trinkwasser und/oder Heizungswasser, wobei eine Wärmepumpe mit einem Lüftungsmodul und einem Warmwasserspeicher eingesetzt wird, wobei mit dem Lüftungsmodul eine Sekundärluft aus einem Raum des Gebäudes abgesaugt und in einem Heizbetrieb von der Wärmepumpe erwärmt wird oder wobei mit dem Lüftungsmodul Sekundärluft aus dem Raum abgesaugt und in einem Kühlbetrieb von der Wärmepumpe gekühlt wird, wobei die erwärmte Sekundärluft oder die gekühlte Sekundärluft in den Raum zurückgefördert wird, wobei von dem Heizbetrieb in den Kühlbetrieb reversibel umschaltbar ist und wobei in dem Heizbetrieb und in dem Kühlbetrieb jeweils ein Wärmeträgermedium mit der Wärmepumpe erwärmt wird, mit welchem Wärmeträgermedium das Trinkwasser erwärmt wird und/oder welches Wärmeträgermedium als erwärmtes Heizungswasser vorzugsweise zur Temperierung des Raums eingesetzt wird. Der Raum des Gebäudes ist beispielsweise ein Nassraum, vorzugsweise ein Badezimmer und/oder Toilettenraum und/oder eine Küche. Besonders bevorzugt ist der Raum ein Trockenraum, beispielsweise ein Wohnzimmer und/oder Schlafzimmer. Es liegt im Rahmen der Erfindung, dass eine relative Luftfeuchtigkeit in dem Trockenraum geringer ist als eine relative Luftfeuchtigkeit in dem Nassraum.

Gemäß einer bevorzugten Ausführungsform wird die Sekundärluft einem Trockenraum entnommen, dann durch die Wärmepumpe temperiert und anschließend dem Trockenraum wieder zugeführt. Es ist möglich, dass der Trockenraum, aus dem die Sekundärluft abgesaugt wird, von dem Trockenraum, in den die Sekundärluft zurückgeführt wird, verschieden ist. Es empfiehlt sich, dass über einen Umschaltimpuls aus einer Lüftungsregelung aus dem Heizbetrieb in den Kühlbetrieb und umgekehrt umschaltbar ist. Zweckmäßigerweise verfügt das Gebäude bzw. der Raum über einen Sensor, welcher Sensor vorzugsweise eine Temperatur und/oder Feuchte und/oder Kohlendioxidgehalt und/oder Personenanwesenheit (Abwesenheitsfunktion) in dem Raum bzw. in dem Gebäude überwacht. Zweckmäßigerweise aktiviert der Sensor den Heizbetrieb, wenn eine dem Sensor vorgegebene Temperatur in dem Raum bzw. in dem Gebäude unterschritten wird. Vorzugsweise aktiviert der Sensor den Kühlbetrieb, wenn eine dem Sensor vorgegebene Temperatur in dem Raum bzw. in dem Gebäude überschritten wird. Vorteilhafterweise ist der Sensor in einem Abluftstrom in Strömungsrichtung der Abluft vor einem Fortluftwärmetauscher angeordnet. Die den Fortluftwärmetauscher verlassende Abluft wird als Fortluft in die Atmosphäre entlassen und/oder der Quellenseite der Wärmepumpe zugeführt. Es liegt im Rahmen der Erfindung, dass der Sensor ein Bestandteil der Lüftungsregelung ist. Empfohlenermaßen wird mit der Lüftungsregelung ein Sekundärluftvolumenstrom eingestellt.

Gemäß einer Ausführungsform wird eine Außenluft als Wärmequelle für die Wärmepumpe eingesetzt. Zweckmäßigerweise wird die Außenluft außerhalb des Gebäudes angesaugt und quellseitig der Wärmepumpe zugeführt. Es ist möglich, dass der Wärmepumpe quellseitig aus dem Raum abgesaugte Raumluft zugeführt wird. Insbesondere wird der Quellseite der Wärmepumpe aus dem Raum abgesaugte Abluft zugeführt, wenn die Abluft aus einem Nassraum abgesaugt wird. Zweckmäßigerweise wird Außenluft (Frischluft) in den Raum des Gebäudes vorzugsweise zur Belüftung eingeführt. Es empfiehlt sich, dass Raumluft und/oder Abluft aus dem Raum des Gebäudes und vorzugsweise aus dem Gebäude als Fortluft herausgeführt wird. Gemäß einer Ausführungsform ist ein Volumenstrom der aus dem Gebäude herausgeführten Fortluft genau so groß bzw. im Wesentlichen genau so groß wie ein Volumenstrom der vorzugsweise zur Belüftung in das Gebäude eingeführten Außenluft (Frischluft).

Vorteilhafterweise wird eine Wärmeenergie der Abluft auf die angesaugte Außenluft vor allem zur Temperierung der Außenluft übertragen, vorzugsweise in dem Fortluftwärmetauscher, bevor die angesaugte Außenluft als Zuluft in das Gebäude bzw. in den Raum des Gebäudes eingeblasen wird. Gemäß einer bevorzugten Ausführungsform wird die angesaugte Außenluft nach der Temperierung mit der Maßgabe befeuchtet, dass der Feuchtegehalt der aus dem Raum abgesaugten Abluft dem Feuchtegehalt der in den Raum eingeblasenen Zuluft entspricht bzw. im Wesentlichen entspricht. Vorteilhafterweise wird der Feuchtegehalt der aus dem Raum bzw. aus dem Gebäude abgesaugten Abluft bei der Temperierung der angesaugten Außenluft auf die Außenluft übertragen. Es hat sich als besonders vorteilhaft herausgestellt, dass die Belüftung des Raumes permanent bzw. unterbrechungsfrei durchgeführt wird, wobei vorzugsweise der Volumenstrom der Fortluft und der angesaugten Außenluft einstellbar ist.

Gemäß einer Ausführungsform werden die Absaugung der Sekundärluft aus dem Raum und die Rückförderung der Sekundärluft in den Raum separat und/oder unabhängig von der Belüftung des Raumes mit Frischluft bzw. Zuluft durchgeführt. Eine Temperatureinstellung der Abluft erfolgt in vorteilhafter Weise im Wesentlichen und vorzugsweise ausschließlich über das Erwärmen oder Kühlen der Sekundärluft. Zweckmäßigerweise sind durch den Sensor eine Leistung der Wärmepumpe und/oder eine Förderung der Sekundärluft und/oder die Belüftung des Raums mit der Zuluft und/oder Abluft regelbar. Besonders bevorzugt erfolgt die Erwärmung des Wärmeträgermediums unabhängig davon, ob mit der Wärmepumpe die Sekundärluft erwärmt wird (Heizbetrieb) oder ob mit der Wärmepumpe die Sekundärluft gekühlt wird (Kühlbetrieb). Mit anderen Worten erfolgt die Erwärmung des Wärmeträgermediums unabhängig von einer Betriebsart der Wärmepumpe. Zweckmäßigerweise wird das erfindungsgemäße Verfahren in einem Niedrigenergiehaus und/oder Passivhaus eingesetzt.

Empfohlenermaßen wird das von der Wärmepumpe erwärmte Wärmeträgermedium in den Warmwasserspeicher eingeleitet und/oder einem Heizungselement zugeführt. Es liegt im Rahmen der Erfindung, dass das Wärmeträgermedium Wasser bzw. Pufferwasser ist. Das erwärmte, vorzugsweise in dem Warmwasserspeicher aufgenommene Pufferwasser wird beispielsweise als Heizungswasser für das Heizungselement eingesetzt, welches Heizungselement vorzugsweise als Flächenheizelement ausgebildet ist. Es ist möglich, dass die Erwärmung des Pufferwassers in Abhängigkeit eines Bedarfs an Warmwasser erfolgt (Bedarfsvorgabe). Grundsätzlich ist es möglich, dass die Erwärmung des Pufferwassers über vorzugsweise nicht veränderbare, feste Vorgaben erfolgt (Festwerteinstellung). Gemäß einer Ausführungsform wird das von der Wärmepumpe erwärmte Wärmeträgermedium einem in dem Warmwasserspeicher angeordneten Warmwasserwärmetauscher zugeführt, wobei mit dem Warmwasserwärmetauscher Wärme des Wärmeträgermediums auf in dem Warmwasserspeicher bevorzugt aufgenommenes Pufferwasser übertragen wird. Zweckmäßigerweise ist in dem Warmwasserspeicher zumindest ein Trinkwasserwärmetauscher angeordnet, wobei mit dem Trinkwasserwärmetauscher Wärme des Wärmeträgermediums auf zu erwärmendes Trinkwasser (Brauchwasser) übertragen wird. Zweckmäßigerweise wird das Trinkwasser mit dem Trinkwasserwärmetauscher in dem Warmwasserspeicher im Durchlaufprinzip erwärmt.

Vorzugsweise wird ein Wärmetauscher, mit welchem Wärmetauscher Wärme von der Wärmepumpe auf das Wärmeträgermedium übertragen wird, im Heizbetrieb und im Kühlbetrieb in der gleichen Richtung von dem Wärmeträgermedium durchströmt. Zweckmäßigerweise wird eine Primärseite des Wärmetauschers von einem mit der Wärmepumpe erwärmten Kühlmittel durchströmt. Eine Sekundärseite des Wärmetauschers wird im Rahmen der Erfindung von dem Wärmeträgermedium durchströmt. Es hat sich bewährt, dass das primärseitig den Wärmetauscher durchströmende Kühlmittel und dass das sekundärseitig den Wärmetauscher durchströmende Wärmeträgermedium vorzugsweise unabhängig von der Betriebsart der Wärmepumpe den Wärmetauscher in gleiche Richtungen durchströmen. Wird die Wärmepumpe von dem Heizbetrieb in den Kühlbetrieb bzw. von dem Kühlbetrieb in den Heizbetrieb umgeschaltet, wird vorzugsweise die Strömungsrichtung des Kühlmittels in der Primärseite des Wärmetauschers und die Strömungsrichtung des Wärmeträgermediums in der Sekundärseite des Wärmetauschers beibehalten. Auf diese Weise wird dauerhaft sichergestellt, dass der Wärmetauscher mit einem hohen Wirkungsgrad gefahren wird.

Gemäß einer Ausführungsform wird das Wärmeträgermedium in einem Wärmeträgermediumkreislauf umgepumpt. Es empfiehlt sich, dass von dem Wärmeträgermedium in dem Wärmetauscher aufgenommene Wärme zu dem in dem Warmwasserspeicher angeordneten Warmwasserwärmetauscher gefördert wird. Grundsätzlich ist es möglich, den Wärmeträgermediumkreislauf pumpenfrei auszubilden. Bevorzugt ist das Heizelement und/oder der Warmwasserspeicher in Reihe mit dem Wärmetauscher geschaltet. Empfohlenermaßen durchströmt das Wärmeträgermedium nach der Erwärmung in dem Wärmetauscher die Pumpeinrichtung und danach den Warmwasserspeicher und/oder das Heizelement. Vorzugsweise sind der Warmwasserspeicher und das Heizelement parallel schaltbar, so dass das Wärmeträgermedium das Flächenheizelement und den Warmwasserspeicher jeweils durchströmt. Zur Verminderung der Vorlauftemperatur des Warmwasserspeichers und/oder des Heizelements ist es möglich, dass dem Warmwasserspeicher und/oder dem Heizelement Wärmeträgermedium beigemischt wird, welches Wärmeträgermedium das Heizelement durchströmt hat.

Bevorzugt weist die Wärmepumpe einen Kühlmittelkreislauf mit einem Verflüssiger (Kondensator) und einem Verdampfer auf, wobei beim Umschalten aus dem Heizbetrieb in den Kühlbetrieb bzw. von dem Kühlbetrieb in den Heizbetrieb eine Leistung eines Verdichters (Kompressors) der Wärmepumpe vermindert wird, welcher Verdichter ein Kühlmittel in dem Kühlmittelkreis der Wärmepumpe komprimiert bzw. umpumpt. Vorteilhafterweise werden durch die Verminderung der Leistung des Verdichters (Kompressors) beim Umschalten vom Heizbetrieb in den Kühlbetrieb oder vom Kühlbetrieb in den Heizbetrieb Druckschläge vermieden. Zweckmäßigerweise wird als Leistungsverminderung des Kompressors eine Drehzahl des Kompressors reduziert, um vorzugsweise ein Druckniveau des Kühlmittels in dem Kühlmittelkreislauf abzusenken. Gemäß einer Ausführungsform ist in den Kühlmittelkreislauf zumindest ein Drucksensor integriert. Besonders bevorzugt weist der Kühlmittelkreislauf zwei Drucksensoren auf, wobei ein erster Drucksensor auf der Druckseite des Verdichters und ein zweiter Drucksensor an der Saugseite des Verdichters angeordnet ist. Empfohlenermaßen wird der Verdichter bzw. Kompressor ausgeschaltet, wenn der druckseitige und/oder saugseitige Drucksensor einen oberhalb eines vorgebbaren Schwellenwertes liegenden Druck in dem Kühlmittelkreislauf feststellt. Es ist möglich, dass der Verdampfer einen Lüfter aufweist, mit welchem Lüfter dem Verdampfer Außenluft (Frischluft) und/oder Fortluft zuführbar ist. Zweckmäßigerweise wird der Lüfter aktiviert, wenn beispielsweise im Heizbetrieb der Druck im Verdampfer bzw. an der Saugseite des Verdichters größer als 5 bar ist. Gemäß einer Ausführungsform wird der Lüfter im Heizbetrieb aktiviert, wenn der Druck im Verdampfer bzw. an der Druckseite des Verdichters zumindest 35 bar ist. Ist der Druck im Verdampfer im Heizbetrieb kleiner als 5 bar bzw. im Kühlbetrieb kleiner als 35 bar, ist der Lüfter deaktiviert. Es empfiehlt sich, dass in dem Kühlmittelkreislauf auf der Druckseite des Verdichters und/oder der Saugseite des Verdichters zumindest ein bzw. jeweils ein Temperatursensor angeordnet ist. Empfohlenermaßen wird der Verdichter abgeschaltet, wenn der Temperatursensor eine Kühlmitteltemperatur feststellt, welche Kühlmitteltemperatur über einem vorgegebenen Schwellenwert liegt. Besonders bevorzugt ist der Temperatursensor bzw. sind die Temperatursensoren als NTC (negative temperature coeffizient)-Temperatursensor/ -Temperatursensoren ausgebildet.

Zweckmäßigerweise gibt das Kühlmittel in dem Kühlmittelkreislauf im Heizbetrieb in dem Verflüssiger Wärme an ein zu temperierendes Medium, vorzugsweise an die Sekundärluft und/oder Wasser ab, wobei das Kühlmittel im Heizbetrieb in dem Verdampfer Wärme aus der Umgebung, vorzugsweise aus der Fortluft und/oder Außenluft, aufnimmt. Empfohlenermaßen wird mit dem Wärmetauscher im Heizbetrieb das Wärmeträgermedium erwärmt, wobei Wärme von dem Kühlmittel vorzugsweise in dem Wärmetauscher auf das Wärmeträgermedium übertragen wird. Es liegt im Rahmen der Erfindung, dass das Kühlmittel im Heizbetrieb zunächst den Verdichter und dann als verdichtetes und erwärmtes Kühlmittel vorzugsweise den Wärmetauscher und im Anschluss an den Wärmetauscher bevorzugt den Verflüssiger durchströmt. Besonders bevorzugt gibt das Kühlmittel in dem Verflüssiger die in dem verdichteten Kühlmittel gespeicherte Wärme an die aus dem Raum abgesaugte Sekundärluft ab. Vorteilhafterweise strömt das Kühlmittel von dem Verflüssiger zu einem Verdampfer, in dem das Kühlmittel unter Abkühlung verdampft. Zweckmäßigerweise wird in dem Verdampfer Wärme, beispielsweise von der Außenluft und/ oder Fortluft auf das zweckmäßigerweise entspannte Kühlmittel übertragen.

Gemäß einer Ausführungsform überträgt das Kühlmittel im Kühlbetrieb in einem in Strömungsrichtung des Kühlmittels dem Verdichter nachgelagerten Wärmetauscher Wärme auf das Wärmeträgermedium, wobei das Kühlmittel in dem Verflüssiger Wärme aus dem Gebäude, vorzugsweise aus der aus dem Gebäude abgesaugten Sekundärluft, aufnimmt. Es hat sich als vorteilhaft herausgestellt, dass das Kühlmittel im Kühlbetrieb im Verdichter verdichtet bzw. komprimiert wird, den Wärmetauscher durchströmt und anschließend durch den Verdampfer geführt wird. In Strömungsrichtung des Kühlmittels ist im Kühlbetrieb hinter dem Verdampfer der Verflüssiger angeordnet, von welchem Verflüssiger aus das vorzugsweise entspannte Kühlmittel dem Verdichter zugeführt wird. Zweckmäßigerweise wird im Kühlbetrieb Wärme des Kühlmittels über den Verdampfer, beispielsweise an die Außenluft, abgegeben. Empfohlenermaßen wird der Verflüssiger im Kühlbetrieb als Verdampfer betrieben. Gemäß einer Ausführungsform wird im Kühlbetrieb der Verdampfer als Verflüssiger eingesetzt. Es ist möglich, im Kühlbetrieb den Verdampfer zu erwärmen und/oder abzutauen. Vorteilhafterweise verfügt der Verdampfer über einen bevorzugt als NTC-Temperaturfühler ausgebildeten Temperatursensor, mit dem die Temperatur und vorteilhafterweise eine Vereisung des Verdampfers messbar ist. Zweckmäßigerweise wird beim Umschalten aus dem Heizbetrieb in den Kühlbetrieb die Richtung bzw. Reihenfolge, in welcher Richtung bzw. Reihenfolge der Verflüssiger und Verdampfer von dem Kühlmittel durchströmt werden, vertauscht, wobei eine Durchströmungsrichtung des Kühlmittels in Bezug auf die Primärseite des Wärmetauschers unveränderlich ist.

Weiterhin betrifft die Erfindung zur Lösung des technischen Problems ein Energiesystem für Gebäude mit einer Wärmepumpe, einem Warmwasserspeicher und einem Lüftungsmodul, wobei mit dem Lüftungsmodul eine Sekundärluft aus einem Raum des Gebäudes zur Wärmepumpe förderbar ist, wobei die Sekundärluft mit der Wärmepumpe in einem Heizbetrieb der Wärmepumpe erwärmbar oder in einem Kühlbetrieb der Wärmepumpe abkühlbar ist, wobei die erwärmte Sekundärluft oder abgekühlte Sekundärluft dem Raum des Gebäudes durch das Lüftungsmodul zuführbar ist, wobei mit der Wärmepumpe ein Wärmeträgermedium im Heizbetrieb und im Kühlbetrieb erwärmbar ist, welches erwärmte Wärmeträgermedium in dem Warmwasserspeicher einleitbar ist und wobei die Wärmepumpe über eine Stelleinrichtung verfügt, mit welcher Stelleinrichtung reversibel aus dem Heizbetrieb der Wärmepumpe in den Kühlbetrieb der Wärmepumpe umschaltbar ist. Es hat sich als besonders vorteilhaft herausgestellt, dass das Wärmeträgermedium im Heizbetrieb und im Kühlbetrieb der Wärmepumpe erwärmt wird bzw. erwärmbar ist. Es liegt im Rahmen der Erfindung, dass die Bereitstellung von erwärmtem Wärmeträgermedium von der Temperierung der Sekundärluft abgekoppelt ist. Zweckmäßigerweise verfügt das Lüftungsmodul über zumindest einen Sekundärluftventilator und/oder zumindest einen Sekundärluftfilter. Es empfiehlt sich, dass das Sekundärluftmodul vorzugsweise durch mechanische Lüftungsklappen von der Wärmepumpe bzw. einem Verflüssiger der Wärmepumpe trennbar ist. Es empfiehlt sich, dass das Energiesystem über ein Frischluftmodul verfügt, über welches Frischluftmodul dem Raum des Gebäudes bzw. dem Gebäude Frischluft bzw. Außenluft als Zuluft zuführbar ist. Gemäß einer Ausführungsform verfügt das Frischluftmodul vorzugsweise über einen Belüftungsventilator. Zweckmäßigerweise wird dem Raum des Gebäudes bzw. dem Gebäude mit dem Belüftungsventilator Frischluft zugeführt. Vorteilhafterweise weist das Frischluftmodul einen Entlüftungsventilator auf, mit welchem Entlüftungsventilator Abluft aus dem Raum des Gebäudes bzw. aus dem Gebäude absaugbar ist. Besonders bevorzugt verfügt das Frischluftmodul über einen Wärmeübertrager, beispielsweise einen Rotationswärmeübertrager. Empfohlenermaßen wird Wärme der Abluft mit dem Wärmeübertrager auf die angesaugte Außenluft übertragen, welche angesaugte Außenluft nach der Wärmeübertragung als temperierte Zuluft in den Raum des Gebäudes bzw. in das Gebäude eingeleitet wird. Besonders bevorzugt verfügt das Frischluftmodul über ein separates Luftkanalsystem, welches Luftkanalsystem von einem Leitungssystem verschieden ist, in welchem Leitungssystem die Sekundärluft aus dem Raum bzw. aus dem Gebäude zu der Wärmepumpe und von der Wärmepumpe zurück in den Raum bzw. in das Gebäude gefördert wird.

Es ist möglich, dass der Belüftungsventilator unabhängig von dem Sekundärluftventilator gesteuert wird bzw. steuerbar ist. Vorteilhafterweise werden der Sekundärluftventilator und der Frischluftventilator mit der Maßgabe betrieben, dass ein Gesamtvolumenstrom, welcher Gesamtvolumenstrom sich aus einem Volumenstrom der Sekundärluft und einem Volumenstrom der Zuluft zusammensetzt, vorzugsweise 300 bis 800 m³ pro Stunde beträgt. Es empfiehlt sich, dass in einem Heizbetrieb der Wärmepumpe oder Kühlbetrieb der Wärmepumpe das Verhältnis eines Sekundärluftvolumenstroms zu einem Abluftvolumenstrom ungefähr 8:1 bis 2:1 und bevorzugt ungefähr 7:1 bis 3:1 beträgt. Grundsätzlich ist es möglich, dass ausschließlich Zuluft in den Raum bzw. in das Gebäude eingeführt wird. Empfohlenermaßen beträgt der Volumenstrom der in den Raum eingeführten Zuluft ungefähr 100 bis 250 m³ pro Stunde.

Es empfiehlt sich, dass die Wärmepumpe einen Kühlmittelkreislauf mit einem Verdichter, einem Verflüssiger und einem Verdampfer aufweist, wobei das Kühlmittel mit dem Verdichter verdichtbar ist, wobei ein Wärmetauscher in den Kühlmittelkreislauf in Strömungsrichtung des Kühlmittels hinter dem Verdichter eingebunden ist, in welchem Wärmetauscher Wärme von dem Kühlmittel auf das Wärmeträgermedium übertragbar ist. Besonders bevorzugt ist der Wärmetauscher als Plattenwärmetauscher ausgebildet. Primärseitig wird der Wärmetauscher vorteilhafterweise von dem Kühlmittel durchströmt. Gemäß einer Ausführungsform wird der Wärmetauscher sekundärseitig besonders bevorzugt von Pufferwasser durchströmt. Empfohlenermaßen ist eine Nennleistung des Verdichters vollständig bzw. im Wesentlichen vollständig abrufbar, wenn erwärmtes Wasser bereitgestellt wird. Zweckmäßigerweise wird der Sekundärluftventilator zusammen mit dem Verdichter aktiviert. Es ist möglich, dass zumindest ein Teil und besonders bevorzugt lediglich ein Teil der Leistung des Sekundärluftventilators und/oder des Belüftungsventilators abgerufen wird/werden, wenn die volle Nennleistung des Verdichters zur Erzeugung von Warmwasser angefordert wird. Durch die Aktivierung des Sekundärluftventilators und/oder Belüftungsventilators wird ein Sekundärluftstrom und/oder Abluftstrom bzw. Fortluftstrom erzeugt, wobei der Sekundärluftstrom und/oder Abluftstrom bzw. Fortluftstrom quellseitig der Wärmepumpe zuführbar ist. In diesem Fall ist die Wärmepumpe mit einem hohen Wirkungsgrad betreibbar, da quellseitig ein Arbeitsmedium mit einer hohen Temperatur zur Verfügung steht. Es empfiehlt sich, dass der Sekundärluftventilator und/oder der Belüftungsventilator lediglich mit einem Teil der Nennleistung des Sekundärluftventilators bzw. des Belüftungsventilators betreibbar sind, wenn vorzugsweise im Kühlbetrieb der Wärmepumpe erwärmtes Wasser bereitet wird.

Es ist möglich, dass eine Pumpeinrichtung vorgesehen ist, mit welcher Pumpeinrichtung das Wärmeträgermedium in einem Wärmeträgermediumkreislauf umpumpbar ist. Der Wärmeträgermediumkreislauf verfügt empfohlenermaßen über ein Leitungssystem mit dem Wärmetauscher, vorzugsweise einem Warmwasserwärmetauscher, zweckmäßigerweise der Pumpeinrichtung und bevorzugt einem Heizelement. Das Heizelement ist beispielsweise ein Flächenheizelement. Über den Wärmetauscher wird dem Wärmeträgermedium Wärme durch die Wärmepumpe zur Verfügung gestellt. Mit dem Warmwasserwärmetauscher erfolgt gemäß einer Ausführungsform eine Wärmeübertragung von dem Wärmeträgermedium auf Wasser, beispielsweise auf Trinkwasser. Vorzugsweise ist der Warmwasserwärmetauscher als in dem Warmwasserspeicher liegender Wärmeübertrager ausgebildet. Gemäß einer besonders bevorzugten Ausführungsform ist die Pumpeinrichtung als Effizienzpumpe ausgebildet.

Vorteilhafterweise ist die Stelleinrichtung als Mehrwegventil ausgebildet, mit welchem Mehrwegventil ein Kühlmittelstrom in dem Kühlmittelkreislauf mit der Maßgabe leitbar bzw. stellbar ist, dass das verdichtete Kühlmittel zunächst dem Wärmetauscher und in einer Heizstellung der Stelleinrichtung anschließend dem Verflüssiger oder in einer Kühlstellung der Stelleinrichtung anschließend dem Verdampfer zuführbar ist. Empfohlenermaßen ist die Stelleinrichtung im Heizbetrieb in der Heizstellung bzw. im Kühlbetrieb in der Kühlstellung. Aus der Heizstellung der Stellvorrichtung ist im Rahmen der Erfindung reversibel in die Kühlstellung umschaltbar. Der Kühlmittelkreislauf beinhaltet vorzugsweise den Verdichter, den Wärmetauscher, die Stelleinrichtung, den Verflüssiger, bevorzugt eine Expansionseinheit und den Verdampfer. Im Heizbetrieb verbindet die Stelleinrichtung vorzugsweise den Wärmetauscher mit dem Verflüssiger und den Verdampfer mit einer Saugseite des Verdichters. Es empfiehlt sich, dass im Kühlbetrieb die Stelleinrichtung den Wärmetauscher mit dem Verdampfer und den Verflüssiger mit der Saugseite des Verdichters verbindet. Die Expansionseinheit ist zweckmäßigerweise zwischen dem Verflüssiger und dem Verdampfer in dem Kühlmittelkreislauf positioniert und ist vorzugsweise bidirektional durchströmbar bzw. betreibbar. Gemäß einer Ausführungsform verfügt die Expansionseinheit über zumindest einen Filtertrockner und zumindest ein Expansionsventil. Es hat sich bewährt, dass das Expansionsventil zwischen zwei Filtertrocknern angeordnet ist. Sowohl das Expansionsventil als auch der Filtertrockner oder die Filtertrockner sind jeweils für einen bidirektionalen Betrieb bestimmt.

Gemäß einer bevorzugten Ausführungsform ist im Heizbetrieb das von dem Verdichter verdichtete Kühlmittel zunächst zu dem Wärmetauscher förderbar, in welchem Wärmetauscher zumindest ein Teil der in dem Kühlmittel gespeicherten Wärme auf das Wärmeträgermedium übertragbar ist, wobei das den Wärmetauscher verlassende Kühlmittel zu dem Verflüssiger förderbar ist, in welchem Verflüssiger Wärme von dem Kühlmittel auf die Sekundärluft übertragen wird bzw. übertragbar ist. Vorteilhafterweise durchströmt das Kühlmittel im Heizbetrieb einen ersten Strömungskanal der Stelleinrichtung, welcher erste Strömungskanal den Wärmetauscher mit dem Verflüssiger verbindet. In Strömungsrichtung des Kühlmittels hinter dem Verflüssiger ist die Expansionseinheit angeordnet. Von der Expansionseinheit strömt das zweckmäßigerweise entspannte Kühlmittel im Heizbetrieb empfohlenermaßen zu dem Verdampfer, in welchem Verdampfer das Kühlmittel im Rahmen der Erfindung Wärme aus der Außenluft und/oder Fortluft aufnimmt. Durch einen zweiten Strömungskanal der Stelleinrichtung wird gemäß einer Ausführungsform im Heizbetrieb das Kühlmittel von einem Ausgang des Verdampfers zu einem Eingang bzw. zur Saugseite des Verdichters geführt. Es empfiehlt sich, dass der Wärmeträgermediumkreislauf, in welchem Wärmeträgermediumkreislauf das Wärmeträgermedium zirkuliert bzw. umgepumpt wird, abgeschlossen von dem Kühlmittelkreislauf des Kühlmittels ist. In den Wärmetauscher erfolgt lediglich eine Wärmeübertragung von dem Kühlmittel auf das Wärmeträgermedium.

Vorzugsweise ist im Kühlbetrieb in dem von dem Verdichter verdichteten Kühlmittel gespeicherte Wärme zunächst in dem Wärmetauscher auf das Wärmeträgermedium übertragbar, wobei das Kühlmittel anschließend dem in dem Kühlmittelkreislauf angeordneten Verdampfer zuleitbar ist, welcher Verdampfer mit einer Kühleinrichtung zur Kondensierung und zur Verminderung der in dem Kühlmittel enthaltenen Wärme ausgestattet ist, wobei der Verdampfer an den Verflüssiger angeschlossen ist, in welchem Verflüssiger das Kühlmittel durch Aufnahme von Wärme aus der Sekundärluft erwärmbar ist. Empfohlenermaßen verbindet ein dritter Strömungskanal der Stelleinrichtung den Wärmetauscher im Kühlbetrieb mit einem Ausgang des Verdampfers. Das Kühlmittel strömt vorzugsweise im Kühlbetrieb von dem Wärmetauscher zu dem Ausgang des Verdampfers und durchströmt den Verdampfer vorzugsweise unter der Abgabe von Wärme an die Außenluft und/oder Fortluft. Im Kühlbetrieb tritt das Kühlmedium vorzugsweise aus dem Eingang des Verdampfers aus und wird bevorzugt durch die Expansionseinheit zu einem Ausgang des Verflüssigers geleitet. In dem Verflüssiger nimmt das Kühlmittel bevorzugt Wärme aus der Sekundärluft auf. Gemäß einer Ausführungsform verfügt die Stelleinrichtung über einen vierten Strömungskanal, mit welchem vierten Strömungskanal ein Eingang des Verflüssigers, aus dem im Kühlbetrieb das Kühlmittel austritt, mit dem Eingang des Verdichters verbunden wird bzw. verbindbar ist. Im Kühlbetrieb strömt das Kühlmittel vorzugsweise vom Ausgang zum Eingang des Verdampfers und/oder vom Ausgang zum Eingang des Verflüssigers. Es liegt im Rahmen der Erfindung, dass der Verflüssiger im Kühlbetrieb als Verdampfer fungiert und dass der Verdampfer im Kühlbetrieb die Funktion des Verflüssigers übernimmt. Gemäß einer Ausführungsform ist der Verflüssiger als ein Wärmeübertrager, vorzugsweise als ein Luft-Lamellen-Wärmeübertrager ausgebildet. Empfohlenermaßen ist der Verdampfer als ein Wärmeübertrager und bevorzugt als ein Luft-Lamellen-Wärmeübertrager ausgestaltet.

Es ist möglich, dass ein Temperaturniveau des die Wärmepumpe verlassenden, erwärmten Wärmeträgermediums vorzugsweise vor dem Eintritt in den Warmwasserwärmetauscher mit einer Zusatzheizeinrichtung anhebbar ist. Die Zusatzheizeinrichtung ist beispielsweise als Elektroheizung und besonders bevorzugt als Elektroheizpatrone ausgebildet. Auf diese Weise wird sichergestellt, dass auch im Falle einer nicht ausreichenden Erwärmung des Wärmeträgermediums durch die Wärmepumpe eine vorgebbare Temperatur des in dem Warmwasserspeicher aufgenommenen Wärmeträgermediums erreichbar ist. Es ist möglich, dass das Energiesystem über eine Solarthermieeinheit verfügt, mit welcher Solarthermieeinheit das Wärmeträgermedium und vorzugsweise das Pufferwasser erwärmbar ist. Zweckmäßigerweise wird ein weiteres Wärmeträgermedium in der Solarthermieeinheit durch Sonnenlicht erwärmt. Es empfiehlt sich, dass Wärme des mit der Solarthermieeinheit erwärmten, weiteren Wärmeträgermediums auf das in dem Warmwasserspeicher bevorratete Wärmeträgermedium beispielsweise mit einem Solarthermiewärmetauscher übertragen wird bzw. übertragbar ist.

Die Wärmepumpe ist im Rahmen der Erfindung eine Luft/Wasser-Wärmepumpe. Besonders bevorzugt ist eine Luft/Luft-Luft/Wasser-Wärmepumpe einsetzbar. Mit der Luft/Luft-Luft/Wasser-Wärmepumpe wird als Wärmequelle Luft, beispielsweise Außenluft und/oder Fortluft, genutzt. Besonders bevorzugt wird Fortluft als Wärmequelle genutzt, wobei in der Abluft enthaltene Wärme zumindest größtenteils mit dem Wärmetauscher, besonders bevorzugt mit dem Rotationswärmetauscher auf in das Gebäude bzw. in den Raum eingeführte Außenluft übertragen wird. Da der Wirkungsgrad des Fortluftwärmetauschers kleiner als eins ist, weist die Fortluft gemäß einer Ausführungsform im Heizbetrieb ein höheres Temperaturniveau bzw. im Kühlbetrieb ein vorzugsweise niedrigeres Temperaturniveau als die Frischluft (Außenluft) auf. Zweckmäßigerweise wird mit der Wärmepumpe Sekundärluft und/oder Wasser, vorzugsweise Pufferwasser, erwärmt. Grundsätzlich ist auch der Einsatz anderer Wärmepumpen möglich. Besonders bevorzugt ist die Wärmepumpe eine leistungsgeregelte bzw. leistungsregelbare Wärmepumpe.

Es ist möglich, dass die Hausstation eine Energieerzeugungseinheit, vorzugsweise eine Photovoltaikeinheit aufweist. Zweckmäßigerweise stellt die Photovoltaikeinheit die elektrische Energie zum Betrieb der Wärmepumpe und/oder des Lüftungsmoduls bereit. Dadurch, dass die Hausstation zumindest einen Teil der erforderlichen elektrischen Energie und vorzugsweise die gesamte zum Betrieb der Hausstation erforderliche Energie erzeugt, zeichnet sich die erfindungsgemäße Hausstation durch eine besondere Nachhaltigkeit und Kohlendioxidemissionsarmut aus. Gemäß einer Ausführungsform verfügt die Hausstation über eine Detektoreinheit, mit welcher Detektoreinheit beispielsweise eine Außentemperatur und/oder eine Sonneneinstrahlung detektierbar ist. Es ist möglich, dass Fenster des Gebäudes verschattet werden, wenn durch die Detektoreinheit eine Sonneneinstrahlung und/oder eine Temperatur festgestellt wird, die oberhalb einer vorgebbaren, maximalen Sonneneinstrahlung und/oder oberhalb einer vorgegebenen Temperatur liegen. Zweckmäßigerweise werden durch die Verschattung eine unkontrollierte Temperierung und ein unerwünschtes Erwärmen des Raumes bzw. des Gebäudes vermieden. Es empfiehlt sich, dass Rollläden des Gebäudes von der Detektoreinheit gesteuert werden, wobei zweckmäßigerweise Fenster des Gebäudes mit den Rollläden verschlossen werden, wenn beispielsweise die Außentemperatur einen vorgegebenen Schwellenwert unterschreitet. Durch das Verschließen von Fensteröffnungen mit Rollläden wird vorzugsweise eine zusätzliche Isolierung des Gebäudes bzw. der Fensterflächen bereitgestellt, wodurch vorteilhafterweise die von der Wärmepumpe aufzubringende Wärme zur Temperierung der Sekundärluft vermindert wird.

Der Erfindung liegt die Erkenntnis zugrunde, dass mit dem erfindungsgemäßen Verfahren und der erfindungsgemäßen Vorrichtung die Temperierung eines Gebäudes und die Bereitstellung von erwärmtem Wasser unter effektiver Ausnutzung der eingesetzten elektrischen Energie erfolgt. Die erfindungsgemäße Vorrichtung zeichnet sich dabei durch einen überraschend einfachen Aufbau aus, wobei insbesondere der Einsatz der Stelleinrichtung eine aufwendige Verrohrung zur Sicherstellung der Funktionalität des Kühlmittelkreislaufs erübrigt. Im Ergebnis zeichnet sich die erfindungsgemäße Vorrichtung durch eine vorteilhaft einfache Steuerbarkeit aus. Mit dem erfindungsgemäßen Verfahren und der erfindungsgemäßen Vorrichtung ist darüber hinaus die Temperierung von Räumen eines Gebäudes unkritisch. Dadurch, dass die Belüftung des Gebäudes von der Temperierung abgekoppelt ist, ist eine unter energetischen Gesichtspunkten äußerst vorteilhafte Belüftung des Gebäudes möglich. Es hat sich gezeigt, dass bei dem erfindungsgemäßen Verfahren die Temperierung der Sekundärluft in vorteilhafter Weise mit der Bereitstellung von erwärmtem Wasser gekoppelt ist, wodurch die Bevorratung von erwärmtem Wasser, beispielsweise Brauchwasser, dauerhaft sichergestellt ist. Hervorzuheben ist, dass die Erwärmung des Wassers von der Betriebsweise der Wärmepumpe unabhängig ist. Das heißt, dass unabhängig davon, ob die Sekundärluft gekühlt oder erwärmt wird, die Bereitstellung von erwärmtem Wasser sichergestellt ist. Im Ergebnis zeichnet sich das erfindungsgemäße Verfahren durch eine flexible Einsetzbarkeit, hohe Funktionssicherheit und hohe Energieeffizienz aus.

Nachfolgend wird die Erfindung anhand einer lediglich ein Ausführungsbeispiel darstellenden Zeichnung erläutert. Es zeigen schematisch:
- Fig. 1: ein erfindungsgemäßes Energiesystem für Gebäude in einer ersten Ausführungsform im Heizbetrieb,
- Fig. 2: das erfindungsgemäße Energiesystem gemäß Fig. 1 im Kühlbetrieb,
- Fig. 3: ein erfindungsgemäßes Energiesystem für Gebäude in einer zweiten Ausführungsform im Heizbetrieb,
- Fig. 4: das erfindungsgemäße Energiesystem gemäß Fig. 3 im Kühlbetrieb und
- Fig. 5: eine schematische Darstellung eines Lüftungsmoduls des erfindungsgemäßen Energiesystems.

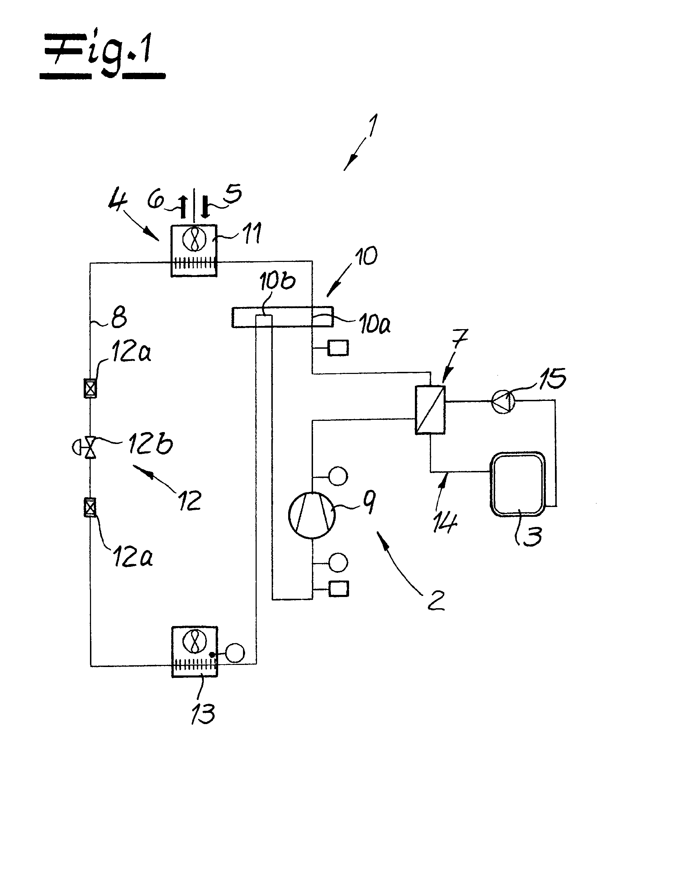

In Fig. 1 ist ein Energiesystem 1 mit einer Wärmepumpe 2 und einem Warmwasserspeicher 3 dargestellt. Die Wärmepumpe 2 verfügt gemäß dem Ausführungsbeispiel über ein Lüftungsmodul 4, mit welchem Lüftungsmodul 4 eine durch die Pfeile 5 und 6 dargestellte Sekundärluft heizbar oder kühlbar ist. Die Wärmepumpe 2 weist gemäß Fig. 1 einen Wärmetauscher 7 auf, der in dem Ausführungsbeispiel als Plattenwärmetauscher ausgebildet ist. Mit dem Wärmetauscher 7 ist ein Wärmeträgermedium erwärmbar, mit welchem Wärmeträgermedium in dem Warmwasserspeicher 3 aufgenommenes Wasser erwärmbar ist.

Weiterhin ist in Fig. 1 dargestellt, dass die Wärmepumpe 2 über einen Kühlmittelkreislauf 8 verfügt, wobei in dem Kühlmittelkreislauf 8 ein Verdichter 9, der Wärmetauscher 7, eine als Vier-Wege-Ventil ausgebildete Stelleinrichtung 10, ein Verflüssiger 11, eine Expansionseinheit 12 und ein Verdampfer 13 angeordnet sind. Im in Fig. 1 dargestellten Heizbetrieb des Energiesystems wird ein Kühlmittel in dem Verdichter 9 verdichtet, zu dem Wärmetauscher 7 und von dem Wärmetauscher 7 durch einen ersten Strömungskanal 10a der Stelleinrichtung 10 zu dem Verflüssiger 11 gefördert. Mit dem Verflüssiger 11 wird die in dem Kühlmittel gespeicherte Wärme an die Sekundärluft 5 abgegeben, woraufhin die Sekundärluft 5 als erwärmte Sekundärluft 6 das Lüftungsmodul 4 verlässt. Nicht dargestellt ist, dass die Sekundärluft 5 einem Raum eines Gebäudes entnommen und nach der Wärmeaufnahme an dem Verflüssiger 11 als erwärmte Sekundärluft 6 mit einem Sekundärluftventilator in den Raum bzw. in das Gebäude zurückgefördert wird. Das Kühlmittel wird nach der Wärmeübertragung auf die Sekundärluft 5 zu der Expansionseinheit 12 geführt, welche Expansionseinheit gemäß Fig. 1 aus zwei Filtertrocknern 12a und einem zwischen den Filtertrocknern 12a angeordneten Expansionsventil 12b besteht. Das nach dem Durchlaufen der Expansionseinheit 12 expandierte und abgekühlte Kühlmittel wird in den Verdampfer 13 geleitet, in welchem Verdampfer 13 das Kühlmittel Wärme aus einer Außenluft oder einer aus dem Raum des Gebäudes bzw. aus dem Gebäude abgesaugten Fortluft aufnimmt. Von dem Verdampfer 13 aus strömt das Kühlmittel durch einen zweiten Strömungskanal 10b der Stelleinrichtung 10 zu dem Verdichter 9, in welchem Verdichter 9 das Kühlmittel erneut verdichtet bzw. komprimiert wird.

Weiterhin ist in Fig. 1 dargestellt, dass der Wärmetauscher 7 Teil eines Wärmeträgermediumkreislaufs 14 ist. Abgesehen von einem möglichen Energie- bzw. Wärmeübertrag von dem Kühlmittel auf ein in dem Wärmeträgermediumkreislauf 14 strömendes Wärmeträgermedium ist kein Stoffaustausch zwischen dem Kühlmittelkreislauf 8 und dem Wärmeträgermediumkreislauf 14 möglich. Zur Aufrechterhaltung einer Zirkulation des Wärmeträgermediums in dem Wärmeträgermediumkreislauf 14 verfügt der Wärmeträgermediumkreislauf 14 über eine als Effizienzpumpe ausgebildete Pumpe 15. In Fig. 1 ist dargestellt, dass die aus dem Raum bzw. aus dem Gebäude angesaugte Sekundärluft 5 mit dem Verflüssiger erwärmt und als erwärmte Sekundärluft 6 in den Raum bzw. in das Gebäude zurückgefördert wird. Parallel zu der Erwärmung der Sekundärluft 5 erfolgt gemäß Fig. 1 eine Erwärmung von in dem Warmwasserspeicher 3 aufgenommenem Pufferwasser, indem mit dem Wärmetauscher 7 Wärme von dem Kühlmittel auf das in dem Wärmeträgermediumkreislauf 14 strömende Wärmeträgermedium übertragen wird. Gemäß dem Ausführungsbeispiel ist das Wärmeträgermedium Pufferwasser. In Fig. 1 ist nicht dargestellt, dass in dem Warmwasserspeicher 3 ein innenliegender Wärmeübertrager angeordnet ist, mit welchem innenliegenden Wärmeübertrager die Wärme des Wärmeträgermediums auf das in dem Warmwasserspeicher 3 bevorratete Wasser übertragen wird.

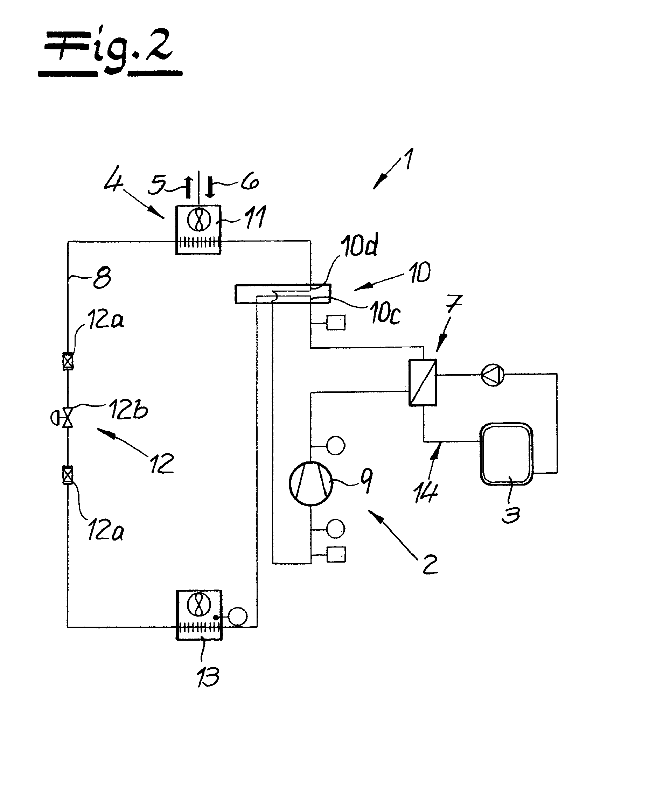

In Fig. 2 ist das Energiesystem gemäß Fig. 1 in einem Kühlbetrieb dargestellt. Das von dem Verdichter 9 komprimierte Kühlmittel durchströmt den Wärmetauscher 7 und wird von dem Wärmetauscher 7 durch einen dritten Strömungskanal 10c der Stelleinrichtung 10 zu dem Verdampfer 13 geführt. Ausgehend von der Strömungsrichtung des Kühlmittels gemäß Fig. 1 durchströmt das Kühlmittel im Kühlbetrieb gemäß Fig. 2 den Verdampfer 13 in umgekehrter Richtung. In dem Verdampfer 13 gibt das Kühlmittel gemäß Fig. 2 Wärme an die Außenluft ab. In der Expansionseinheit 12 wird das mit dem Verdampfer 13 abgekühlte Kühlmittel entspannt, dadurch abgekühlt und dem Verflüssiger 11 zugeführt. Im Vergleich zur Anströmung des Verflüssigers 11 in Fig. 1 strömt das Kühlmittel gemäß Fig. 2 in umgekehrter bzw. entgegengesetzter Richtung in den Verflüssiger 11. Die aus dem Raum des Gebäudes angesaugte Sekundärluft 6 wird gemäß Fig. 2 an dem Verflüssiger 11 gekühlt und als gekühlte Sekundärluft 5 in den Raum zurückgefördert. Von dem Verflüssiger 11 strömt das abgekühlte Kühlmittel durch einen vierten Strömungskanal 10d der Stelleinrichtung 10 zu dem Verdichter 9, in dem es erneut unter Erwärmung komprimiert wird. Aus den Fig. 1 und 2 ist ersichtlich, dass unabhängig von der Betriebsart der Wärmepumpe 2 das in dem Wärmeträgermediumkreislauf 14 strömende Pufferwasser mit dem Wärmetauscher 7 stets erwärmt wird.

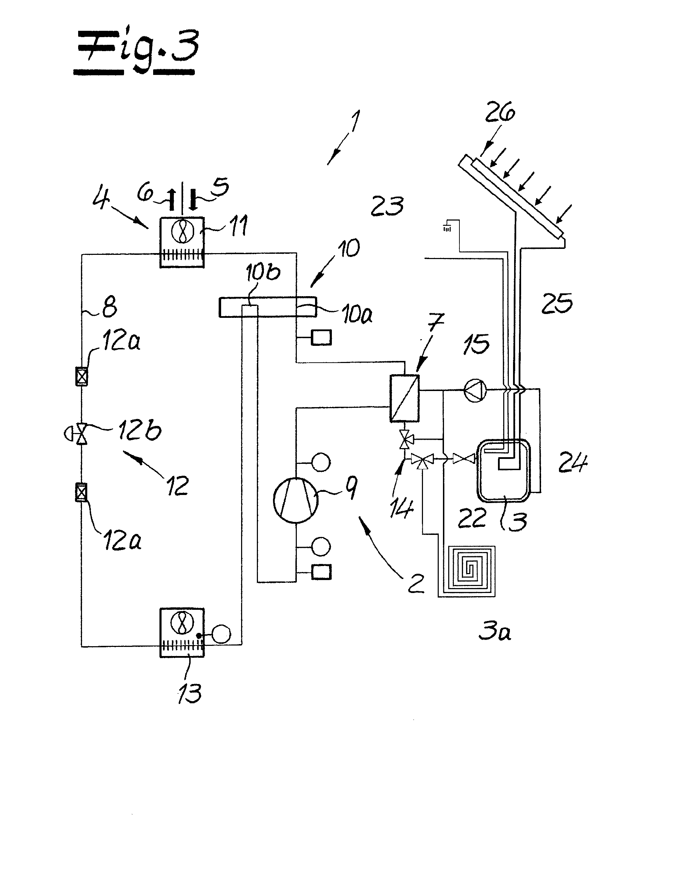

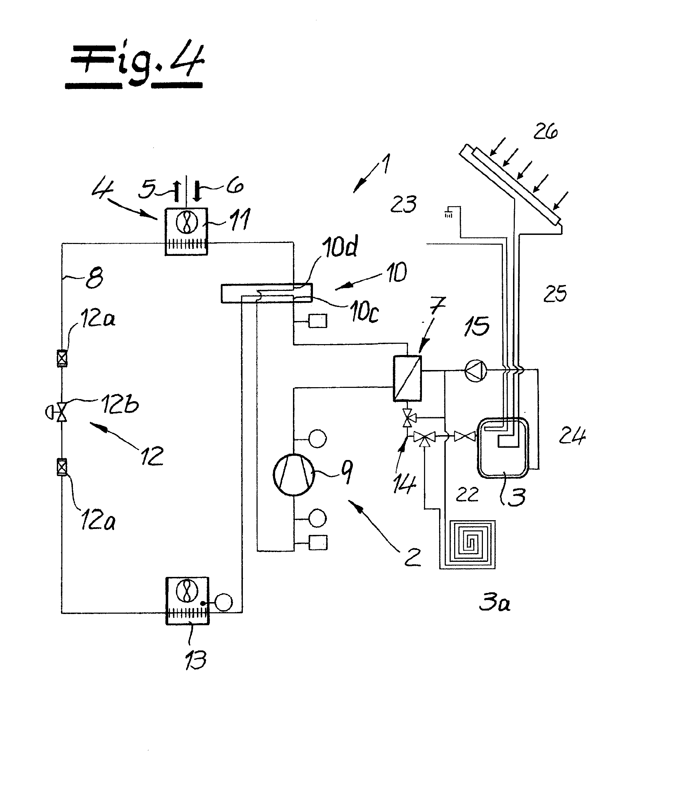

Das Energiesystem 1' gemäß den Fig. 3 und 4 weist den gleichen Kühlmittelkreislauf 8 wie das Energiesystem 1 gemäß den Fig. 1 und 2 auf. Unabhängig von der Betriebsart des Kühlmittelkreislaufs 8 bzw. der Wärmepumpe 2 ist durch die Wärmepumpe 2 gemäß den Fig. 3 und 4 mit dem Wärmetauscher 7 ein Wärmeträgermedium erwärmbar. In den Fig. 3 und 4 ist erkennbar, dass das Energiesystem 1' über einen Wärmeträgermediumkreislauf 14' verfügt, in welchen Wärmeträgermediumkreislauf 14' ein mit einem Warmwasserspeicher 3' in Reihe schaltbares Flächenheizelement 3a angeordnet ist. Gemäß den Fig. 3 und 4 ist von dem Wärmetauscher 7 das erwärmte Wärmeträgermedium dem Flächenheizelement 3a und dem Wärmespeicher 3' zuführbar. Das Wärmeträgermedium gemäß den Fig. 3 und 4 ist Pufferwasser.

In dem Warmwasserspeicher 3' ist gemäß Fig. 3 und 4 ein Trinkwasserwärmetauscher 22 angeordnet, mit dem von einer nicht dargestellten Quelle stammendes Trinkwasser erwärmbar und einem Verbraucher 23 zuführbar ist. Der Verbraucher 23 ist in den Fig. 3 und 4 als eine Dusche dargestellt. Weiterhin ist in den Fig. 3 und 4 erkennbar, dass in dem Warmwasserspeicher 3' ein Solarthermiewärmetauscher 24 angeordnet ist. Der Solarthermiewärmetauscher 24 ist Bestandteil eines weiteren bzw. separaten Wärmeträgermediumkreislaufs 25, in dem ein weiteres Wärmeträgermedium von einem Solarthermiemodul 26 zu dem Solarthermiewärmetauscher 24 strömt. Mit dem weiteren Wärmeträgermedium ist durch das Solarthermiemodul 26 gewonnene Wärme auf das Wärmeträgermedium übertragbar, wobei dazu der Solarthermiewärmetauscher 24 von dem weiteren Wärmeträgermedium nach dem Aufheizen in dem Solarthermiemodul 26 durchströmt wird.

Das Wärmeträgermedium gemäß den Fig. 3 und 4 wird durch die Wärmepumpe 2 bzw. den Wärmetauscher 7 erwärmt. Zur Sicherstellung einer ausreichenden Zirkulation des Wärmeträgermediums in dem Wärmeträgermediumkreislauf 14' verfügt der Wärmeträgermediumkreislauf 14' über eine Pumpe bzw. Pumpeinrichtung 15, mit welcher das Wärmeträgermedium in dem Wärmeträgermediumkreislauf 14' umgepumpt wird.

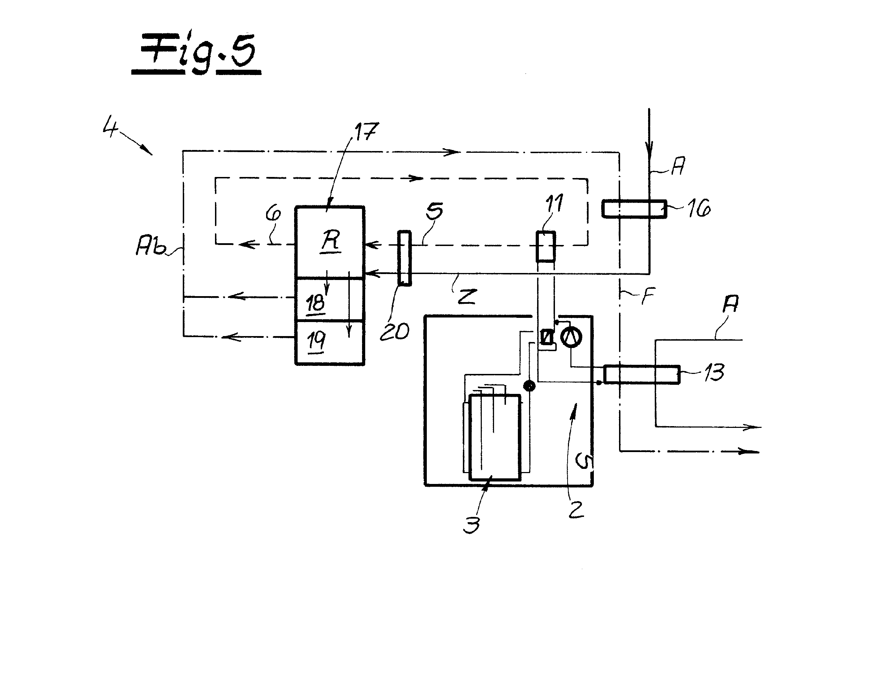

In Fig. 5 ist die Verbindung der Bereitstellung von erwärmtem Wasser mit der Belüftung des Gebäudes dargestellt. Das Lüftungsmodul 4 verfügt gemäß Fig. 5 über einen als Rotationswärmetauscher 16 ausgebildeten Wärmeübertrager, durch welchen Rotationswärmetauscher 16 von außerhalb des Gebäudes angesaugte Außenluft A bzw. Frischluft A angesaugt wird. Aus einem Raum 18, 19 des Gebäudes abgesaugte Abluft Ab wird gemäß Fig. 5 ebenfalls durch den Rotationswärmetauscher 16 geführt, wobei die in der Abluft Ab enthaltene Wärme auf die angesaugte Frischluft A in dem Rotationswärmetauscher 16 übertragen wird. Die auf diese Weise erwärmte Frischluft A wird als Zuluft Z in das Gebäude eingeführt. Gemäß dem Ausführungsbeispiel und Fig. 5 erfolgt die Einführung der Zuluft Z in einen Wohnbereich 17 (Trockenraum) des Gebäudes. Aus dem Wohnbereich 17 wird gemäß Fig. 5 die Sekundärluft 6 abgesaugt und dem Verflüssiger 11 der Wärmepumpe 2 zugeführt, wobei in dem Verflüssiger 11 eine Temperierung der Sekundärluft 6 erfolgt, welche Sekundärluft 6 dann als temperierte Sekundärluft 5 in den Wohnbereich 17 zurückgeführt wird. Gemäß Fig. 5 wird die Zuluft Z vor dem Einführen in den Wohnbereich 17 in dem Mischbehälter 20 mit der temperierten Sekundärluft 5 vermischt. Die Temperierung einer Raumluft R des Wohnbereichs 17 erfolgt gemäß Fig. 5 durch eine Temperierung der Sekundärluft 5, wobei vorzugsweise und gemäß dem Ausführungsbeispiel die Zuluft Z abgesehen von der Wärmeübertragung in dem Rotationswärmetauscher 16 von der Abluft Ab auf die Außenluft A nicht weiter temperiert wird. Von dem Wohnbereich 17 wird die temperierte Raumluft R zu einem Nassraum 18 und einer Küche 19 geführt. Aus dem Nassraum 18 und der Küche 19 wird jeweils ein Abluftstrom Ab abgesaugt und dem Rotationswärmetauscher 16 zugeführt. Der den Rotationswärmetauscher 16 verlassende Fortluftstrom F verfügt gemäß Fig. 5 über einen höheren Energieinhalt als die Frischluft bzw. Außenluft A und wird gemäß Fig. 5 dem Verdampfer 13 der Wärmepumpe 2 als Wärmequelle zugeführt. Mit anderen Worten wird die Fortluft F nach Durchlaufen des Rotationswärmetauschers 16 quellseitig der Wärmepumpe 2 zugeführt. Gemäß Fig. 5 wird zur Erhöhung des Volumenstroms an dem Verdampfer 13 dem Fortluftstrom F Außenluft A zugefügt. In Fig. 5 ist dargestellt, dass durch die Wärmepumpe 2 die Sekundärluft 5 erwärmt wird, so dass der Wohnbereich 17 geheizt wird. Parallel zur Beheizung des Wohnbereichs 17 wird gemäß Fig. 5 Wasser in dem Warmwasserspeicher 3 erwärmt.

## Patentansprüche

1. Verfahren zur Temperierung eines Gebäudes und zur Bereitstellung von erwärmtem Trinkwasser und/oder Heizungswasser, wobei eine Wärmepumpe (2) mit einem Lüftungsmodul (4) eingesetzt wird, wobei mit dem Lüftungsmodul (4) eine Sekundärluft (5) aus einem Raum (17) des Gebäudes abgesaugt und in einem Heizbetrieb von der Wärmepumpe (2) erwärmt wird oder wobei mit dem Lüftungsmodul (4) Sekundärluft (6) aus dem Raum (17) abgesaugt und in einem Kühlbetrieb von der Wärmepumpe (2) gekühlt wird, wobei die erwärmte Sekundärluft (6) oder die gekühlte Sekundärluft (5) in den Raum (17) zurückgefördert wird, wobei von dem Heizbetrieb in den Kühlbetrieb reversibel umschaltbar ist und wobei in dem Heizbetrieb und in dem Kühlbetrieb jeweils ein Wärmeträgermedium mit der Wärmepumpe (2) erwärmt wird, mit welchem Wärmeträgermedium das Trinkwasser erwärmt wird und/oder welches Wärmeträgermedium als erwärmtes Heizungswasser vorzugsweise zur Temperierung des Raums (17) eingesetzt wird.

2. Verfahren nach Anspruch 1, wobei das von der Wärmepumpe (2) erwärmte Wärmeträgermedium in einen Warmwasserspeicher (3') eingeleitet und/oder einem Heizungselement (3a) zugeführt wird.

3. Verfahren nach einem der Ansprüche 1 oder 2, wobei ein Wärmetauscher (7), mit welchem Wärmetauscher (7) Wärme von der Wärmepumpe (2) auf das Wärmeträgermedium übertragen wird, im Heizbetrieb und im Kühlbetrieb in der gleichen Richtung von dem Wärmeträgermedium durchströmt wird.

4. Verfahren nach einem der Ansprüche 1 bis 3, wobei das Wärmeträgermedium in einem Wärmeträgermediumkreislauf (14') umgepumpt wird.

5. Verfahren nach einem der Ansprüche 1 bis 4, wobei die Wärmepumpe (2) einen Kühlmittelkreislauf (8) mit einem Verflüssiger (11) und einem Verdampfer (13) aufweist und wobei beim Umschalten aus dem Heizbetrieb in den Kühlbetrieb bzw. von dem Kühlbetrieb in den Heizbetrieb eine Leistung eines Verdichters (9) der Wärmepumpe (2) vermindert wird, welcher Verdichter (9) ein Kühlmittel in dem Kühlmittelkreislauf (8) der Wärmepumpe (2) komprimiert bzw. umpumpt.

6. Verfahren nach Anspruch 5, wobei das Kühlmittel in dem Kühlmittelkreislauf (8) im Heizbetrieb in dem Verflüssiger (11) Wärme an die Sekundärluft (5) abgibt, wobei das Kühlmittel im Heizbetrieb in dem Verdampfer (13) Wärme aus einer Umgebung, vorzugsweise aus einer Außenluft, aufnimmt, wobei das Wärmeträgermedium erwärmt wird, wobei Wärme von dem Kühlmittel auf das Wärmeträgermedium in dem Wärmetauscher (7) übertragen wird.

7. Verfahren nach einem der Ansprüche 5 bis 6, wobei im Kühlbetrieb das Kühlmittel in einem in Strömungsrichtung des Kühlmittels dem Verdichter (11) nachgelagerten Wärmetauscher (7) Wärme auf das Wärmeträgermedium überträgt, wobei das Kühlmittel in dem Verflüssiger (11) Wärme aus dem Gebäude, vorzugsweise aus der aus dem Gebäude abgesaugten Sekundärluft (6), aufnimmt.

8. Energiesystem für Gebäude mit einer Wärmepumpe (2), einem Warmwasserspeicher (3') und einem Lüftungsmodul (4), wobei mit dem Lüftungsmodul (4) eine Sekundärluft (5) aus einem Raum (17) des Gebäudes zur Wärmepumpe (2) förderbar ist, wobei die Sekundärluft (5, 6) mit der Wärmepumpe (2) in einem Heizbetrieb der Wärmepumpe (2) erwärmbar oder in einem Kühlbetrieb der Wärmepumpe (2) abkühlbar ist, wobei die erwärmte Sekundärluft (6) oder die abgekühlte Sekundärluft (5) dem Raum des Gebäudes durch das Lüftungsmodul (4) zuführbar ist, wobei mit der Wärmepumpe (2) ein Wärmeträgermedium im Heizbetrieb und im Kühlbetrieb erwärmbar ist, welches erwärmte Wärmeträgermedium in den Warmwasserspeicher (3') einleitbar ist, wobei die Wärmepumpe (2) über eine Stelleinrichtung (10) verfügt, mit welcher Stelleinrichtung (10) reversibel aus dem Heizbetrieb der Wärmepumpe (2) in den Kühlbetrieb der Wärmepumpe (2) umschaltbar ist.

9. Energiesystem nach Anspruch 8, wobei die Wärmepumpe (2) einen Kühlmittelkreislauf (8) mit einem Verdichter (9), einem Verflüssiger (11) und einem Verdampfer (13) aufweist, wobei das Kühlmittel mit dem Verdichter (9) verdichtbar ist, wobei ein Wärmetauscher (7) in den Kühlmittelkreislauf in Strömungsrichtung des Kühlmittels hinter dem Verdichter (9) eingebunden ist, in welchem Wärmetauscher Wärme von dem Kühlmittel auf das Wärmeträgermedium übertragbar ist.

10. Energiesystem nach einem der Ansprüche 8 oder 9, wobei der Wärmetauscher (7) als Plattenwärmetauscher ausgebildet ist.

11. Energiesystem nach einem der Ansprüche 8 bis 10, wobei eine Pumpeinrichtung (15) vorgesehen ist, mit welcher Pumpeinrichtung (15) das Wärmeträgermedium in einem Wärmeträgermediumkreislauf (14') umpumpbar ist.

12. Energiesystem nach einem der Ansprüche 8 bis 11, wobei die Stelleinrichtung (10) als Mehrwegventil ausgebildet ist, mit welchem Mehrwegventil ein Kühlmittelstrom in dem Kühlmittelkreislauf (8) mit der Maßgabe leitbar ist, dass das verdichtete Kühlmittel zunächst dem Wärmetauscher (7) und in einer Heizstellung der Stelleinrichtung (10) anschließend dem Verflüssiger (11) oder in einer Kühlstellung der Stelleinrichtung (10) anschließend dem Verdampfer (13) zuführbar ist.

13. Energiesystem nach einem der Ansprüche 8 bis 12, wobei im Heizbetrieb das von dem Verdichter (9) verdichtete Kühlmittel zunächst zu dem Wärmetauscher (7) förderbar ist, in welchem Wärmetauscher (7) zumindest ein Teil der in dem Kühlmittel gespeicherten Wärme auf das Wärmeträgermedium übertragbar ist, wobei das den Wärmetauscher (7) verlassende Kühlmittel zu dem Verflüssiger (11) förderbar ist, in welchen Verflüssiger (11) Wärme von dem Kühlmittel auf die Sekundärluft (5) übertragen wird.

14. Energiesystem nach einem der Ansprüche 8 bis 13, wobei im Kühlbetrieb in dem von dem Verdichter (9) verdichteten Kühlmittel gespeicherte Wärme zunächst in dem Wärmetauscher (7) auf das Wärmeträgermedium übertragbar ist, wobei das Kühlmittel anschließend dem in dem Kühlmittelkreislauf (8) angeordneten Verdampfer (13) zuleitbar ist, welcher Verdampfer (13) mit einer Kühleinrichtung zur Kondensierung und zur Verminderung der in dem Kühlmittel enthaltenen Wärme ausgestattet ist, wobei der Verdampfer (13) an den Verflüssiger (11) angeschlossen ist, in welchem Verflüssiger (11) das Kühlmittel durch Aufnahme von Wärme aus der Sekundärluft (6) erwärmbar ist.

15. Energiesystem nach einem der Ansprüche 8 bis 14, wobei ein Temperaturniveau des die Wärmepumpe (2) verlassenden, erwärmten Wärmeträgermediums vorzugsweise vor dem Eintritt in den Warmwasserwärmetauscher mit einer Zusatzheizeinrichtung anhebbar ist.

## Geänderte Patentansprüche

### Geänderte Patentansprüche gemäss Regel 137(2) EPÜ.

**1.** Verfahren zur Temperierung eines Gebäudes und zur Bereitstellung von erwärmtem Trinkwasser und/oder Heizungswasser, wobei eine Wärmepumpe (2) mit einem Lüftungsmodul (4) eingesetzt wird, wobei mit dem Lüftungsmodul (4) eine Sekundärluft (5) aus einem Raum (17) des Gebäudes abgesaugt und in einem Heizbetrieb von der Wärmepumpe (2) erwärmt wird oder wobei mit dem Lüftungsmodul (4) Sekundärluft (6) aus dem Raum (17) abgesaugt und in einem Kühlbetrieb von der Wärmepumpe (2) gekühlt wird, wobei die erwärmte Sekundärluft (6) oder die gekühlte Sekundärluft (5) in den Raum (17) zurückgefördert wird, wobei von dem Heizbetrieb in den Kühlbetrieb reversibel umschaltbar ist und wobei in dem Heizbetrieb und in dem Kühlbetrieb jeweils ein Wärmeträgermedium mit der Wärmepumpe (2) erwärmt wird, mit welchem Wärmeträgermedium das Trinkwasser erwärmt wird und/oder welches Wärmeträgermedium als erwärmtes Heizungswasser vorzugsweise zur Temperierung des Raums (17) eingesetzt wird und wobei die Wärmepumpe (2) einen Kühlmittelkreislauf (8) mit einem Verflüssiger (11) und einem Verdampfer (13) aufweist und wobei beim Umschalten aus dem Heizbetrieb in den Kühlbetrieb beziehungsweise von dem Kühlbetrieb in den Heizbetrieb eine Leistung eines Verdichters (9) der Wärmepumpe (2) vermindert wird, welcher Verdichter (9) ein Kühlmittel in den Kühlmittelkreislauf (8) der Wärmepumpe (2) komprimiert beziehungsweise umpumpt.

**2.** Verfahren nach Anspruch 1, wobei das von der Wärmepumpe (2) erwärmte Wärmeträgermedium in einen Warmwasserspeicher (3') eingeleitet und/oder einem Heizungselement (3a) zugeführt wird.

**3.** Verfahren nach einem der Ansprüche 1 oder 2, wobei ein Wärmetauscher (7), mit welchem Wärmetauscher (7) Wärme von der Wärmepumpe (2) auf das Wärmeträgermedium übertragen wird, im Heizbetrieb und im Kühlbetrieb in der gleichen Richtung von dem Wärmeträgermedium durchströmt wird.

**4.** Verfahren nach einem der Ansprüche 1 bis 3, wobei das Wärmeträgermedium in einem Wärmeträgermediumkreislauf (14') umgepumpt wird.

**5.** Verfahren nach einem der Ansprüche 1 bis 4, wobei das Kühlmittel in dem Kühlmittelkreislauf (8) im Heizbetrieb in dem Verflüssiger (11) Wärme an die Sekundärluft (5) abgibt, wobei das Kühlmittel im Heizbetrieb in dem Verdampfer (13) Wärme aus einer Umgebung, vorzugsweise aus einer Außenluft, aufnimmt, wobei das Wärmeträgermedium erwärmt wird, wobei Wärme von dem Kühlmittel auf das Wärmeträgermedium in dem Wärmetauscher (7) übertragen wird.

**6.** Verfahren nach einem der Ansprüche 1 bis 5, wobei im Kühlbetrieb das Kühlmittel in einem in Strömungsrichtung des Kühlmittels dem Verdichter (11) nachgelagerten Wärmetauscher (7) Wärme auf das Wärmeträgermedium überträgt, wobei das Kühlmittel in dem Verflüssiger (11) Wärme aus dem Gebäude, vorzugsweise aus der aus dem Gebäude abgesaugten Sekundärluft (6), aufnimmt.

**7.** Energiesystem für Gebäude mit einer Wärmepumpe (2), einem Warmwasserspeicher (3') und einem Lüftungsmodul (4), wobei mit dem Lüftungsmodul (4) eine Sekundärluft (5) aus einem Raum (17) des Gebäudes zur Wärmepumpe (2) förderbar ist, wobei die Sekundärluft (5, 6) mit der Wärmepumpe (2) in einem Heizbetrieb der Wärmepumpe (2) erwärmbar oder in einem Kühlbetrieb der Wärmepumpe (2) abkühlbar ist, wobei die erwärmte Sekundärluft (6) oder die abgekühlte Sekundärluft (5) dem Raum des Gebäudes durch das Lüftungsmodul (4) zuführbar ist, wobei mit der Wärmepumpe (2) ein Wärmeträgermedium im Heizbetrieb und im Kühlbetrieb erwärmbar ist, welches erwärmte Wärmeträgermedium in den Warmwasserspeicher (3') einleitbar ist, wobei die Wärmepumpe (2) über eine Stelleinrichtung (10) verfügt, mit welcher Stelleinrichtung (10) reversibel aus dem Heizbetrieb der Wärmepumpe (2) in den Kühlbetrieb der Wärmepumpe (2) umschaltbar ist und wobei die Wärmepumpe (2) einen Kühlmittelkreislauf (8) mit einem Verflüssiger (11) und einem Verdampfer (13) aufweist und wobei beim Umschalten aus dem Heizbetrieb in den Kühlbetrieb bzw. von dem Kühlbetrieb in den Heizbetrieb eine Leistung eines Verdichters (9) der Wärmepumpe (2) verminderbar ist, welcher Verdichter (9) ein Kühlmittel in den Kühlmittelkreislauf (8) der Wärmepumpe (2) komprimiert bzw. umpumpt.

**8.** Energiesystem nach Anspruch 7, wobei die Wärmepumpe (2) einen Kühlmittelkreislauf (8) mit einem Verdichter (9), einem Verflüssiger (11) und einem Verdampfer (13) aufweist, wobei das Kühlmittel mit dem Verdichter (9) verdichtbar ist, wobei ein Wärmetauscher (7) in den Kühlmittelkreislauf in Strömungsrichtung des Kühlmittels hinter dem Verdichter (9) eingebunden ist, in welchem Wärmetauscher Wärme von dem Kühlmittel auf das Wärmeträgermedium übertragbar ist.

**9.** Energiesystem nach einem der Ansprüche 7 oder 8, wobei der Wärmetauscher (7) als Plattenwärmetauscher ausgebildet ist.

**10.** Energiesystem nach einem der Ansprüche 7 bis 9, wobei eine Pumpeinrichtung (15) vorgesehen ist, mit welcher Pumpeinrichtung (15) das Wärmeträgermedium in einem Wärmeträgermediumkreislauf (14') umpumpbar ist.

**11.** Energiesystem nach einem der Ansprüche 7 bis 10, wobei die Stelleinrichtung (10) als Mehrwegventil ausgebildet ist, mit welchem Mehrwegventil ein Kühlmittelstrom in dem Kühlmittelkreislauf (8) mit der Maßgabe leitbar ist, dass das verdichtete Kühlmittel zunächst dem Wärmetauscher (7) und in einer Heizstellung der Stelleinrichtung (10) anschließend dem Verflüssiger (11) oder in einer Kühlstellung der Stelleinrichtung (10) anschließend dem Verdampfer (13) zuführbar ist.

**12.** Energiesystem nach einem der Ansprüche 7 bis 11, wobei im Heizbetrieb das von dem Verdichter (9) verdichtete Kühlmittel zunächst zu dem Wärmetauscher (7) förderbar ist, in welchem Wärmetauscher (7) zumindest ein Teil der in dem Kühlmittel gespeicherten Wärme auf das Wärmeträgermedium übertragbar ist, wobei das den Wärmetauscher (7) verlassende Kühlmittel zu dem Verflüssiger (11) förderbar ist, in welchen Verflüssiger (11) Wärme von dem Kühlmittel auf die Sekundärluft (5) übertragen wird.

**13.** Energiesystem nach einem der Ansprüche 7 bis 12, wobei im Kühlbetrieb in dem von dem Verdichter (9) verdichteten Kühlmittel gespeicherte Wärme zunächst in dem Wärmetauscher (7) auf das Wärmeträgermedium übertragbar ist, wobei das Kühlmittel anschließend dem in dem Kühlmittelkreislauf (8) angeordneten Verdampfer (13) zuleitbar ist, welcher Verdampfer (13) mit einer Kühleinrichtung zur Kondensierung und zur Verminderung der in dem Kühlmittel enthaltenen Wärme ausgestattet ist, wobei der Verdampfer (13) an den Verflüssiger (11) angeschlossen ist, in welchem Verflüssiger (11) das Kühlmittel durch Aufnahme von Wärme aus der Sekundärluft (6) erwärmbar ist.

**14.** Energiesystem nach einem der Ansprüche 7 bis 13, wobei ein Temperaturniveau des die Wärmepumpe (2) verlassenden, erwärmten Wärmeträgermediums vorzugsweise vor dem Eintritt in den Warmwasserwärmetauscher mit einer Zusatzheizeinrichtung anhebbar ist.
